# EUROPEAN PATENT APPLICATION

(11) **EP 2 328 012 A1**
(43) Date of publication of application: **01.06.2011**
(21) Application number: 09808142.5
(22) Date of filing: 30.06.2009
(51) Int. Cl.: G02F 1/133, G09G 3/04, G09G 3/20, G09G 3/36

(54) **METHOD AND DEVICE FOR DRIVING A BISTABLE NEMATIC DOT-MATRIX LIQUID CRYSTAL DISPLAY**

(30) Priority: 19.08.2008 JP 2008210851; 19.08.2008 JP 2008210853
(71) Applicant: Seiko Instruments Inc., Chiba-shi Chiba 261-8507 (JP)
(72) Inventor: NOGAWA, Shinichi, Chiba-shi Chiba 261-8507 (JP); HOSHINO, Masafumi, Chiba-shi Chiba 261-8507 (JP)
(74) Representative: Cloughley, Peter Andrew
(86) International application number: PCT/JP2009/061916
(87) International publication number: WO 2010/021206

(57) **Abstract**

A driving device includes a bistable liquid crystal display panel having a common line and a segment line, a common driving section for driving the common line, a segment driving section for driving the segment line, a power source circuit for generating a driving potential, and a control section for controlling the common driving section, the segment driving section, and the power source circuit. In a case of low temperature, a mode for performing driving control with higher voltage efficiency to set a maximum voltage amplitude is selected. In a case of high temperature, a driving mode that does not use the maximum voltage amplitude is selected. Therefore, a driving means suitable for a bistable nematic dot matrix liquid crystal display is provided.

## Description

### Technical Field

The present invention relates to an electrical driving signal for performing display control of a liquid crystal display and a device for driving the liquid crystal display.

### Background Art

Most of liquid crystal displays which are currently manufactured are of a monostable type. In the monostable type, an electrical signal is applied between electrodes sandwiching a liquid crystal to display some image. After that, when the electrical signal is cut off, the liquid crystal returns to a specific state, and hence the displayed image disappears. In contrast to this, a bistable liquid crystal has two kinds of stable states while the electrical signal is cut off, and hence the displayed image does not disappear. The two kinds of stable states may be switched by the application of suitable electrical signals.

In the two kinds of stable states, light transmission states are different from each other, and hence an image may be displayed by a combination with polarizing elements. The image may also be changed by the application of a specific electrical signal. Even when the electric signal is cut off, the displayed image is in a stable state, and hence the image may be stored. Therefore, a bistable liquid crystal display may be applied to various uses and thus is useful. Further, power for maintaining the displayed image is unnecessary. As a result, it is effective to suppress power consumption of mobile devices.

A bistable liquid crystal panel having the two kinds of stable states has been proposed as a screen called "BiNem" (registered trademark) (see, for example, Patent Document 1). Patent Document 1 also proposes an electrical signal applying method in a case where a stored display image is changed.

### Prior Art Document

### Patent Document

Patent Document 1: JP 2004-4552 A

### Disclosure of the Invention

### Problems to be solved by the Invention

It is an object of the present invention to provide a driving means which is most suitable for a bistable nematic dot matrix liquid crystal display.

In order to change a displayed image on such a bistable liquid crystal display, it is necessary to switch between the two kinds of stable states. Therefore, the control using a large driving voltage is generally required. Moreover, a liquid crystal has a characteristic in which viscosity significantly changes depending on a temperature. When the viscosity changes, a necessary driving voltage varies. A switched driving voltage amplitude in a case of low temperature is large (for example, approximately 40 volts). In contrast to this, the driving voltage amplitude in a case of high temperature is small (for example, equal to or lower than 10 volts).

In the case of high temperature, the driving voltage amplitude is small. Therefore, power supply voltages of common and segment driving devices are reduced for driving or a waveform with small voltage amplitude is output while the power supply voltage is high.

An ON-resistance of an output transistor increases as the voltage reduces. Further, there is a limit that the voltage cannot be reduced to a value equal to or lower than an operating voltage range of the driving device.

When the waveform with small voltage amplitude is to be output while the power supply voltage is high, the ON-resistance is large because of a substrate effect of the output transistor.

In general, the bistable liquid crystal panel has a larger equivalent load capacitance than a normal monostable super twisted nematic (STN) liquid crystal panel. Therefore, the charge and discharge amount of the bistable panel is large, and hence the driving device requires high current supply capacity. The output transistor for a common-segment signal serving as a driving signal is required to have a low ON-resistance. In other words, the driving device requires high driving capacity to perform rapid charging and discharging of common-segment charges.

When a common-segment terminal voltage serving as a driving signal is expressed by "VCOM-VSEG", the characteristic of the bistable liquid crystal panel is changed between negative side control and positive side control. The negative side or positive side control means a case where a switched change in voltage is controlled on the negative side or positive side of the terminal voltage. As a result, there is a difference in driving voltages necessary for switching of the bistable liquid crystal panel and in reliability of the switching, that is, display quality.

In general, the negative side control may be efficient driving control with a small voltage amplitude. The negative side control provides good display quality but has a large current consumption. This is because the transfer of large amount of charges at the time of switching in a driving device is generated at a high potential. On the other hand, the positive side control has a small current consumption if display quality is acceptable. This is because a movement of the transfer of large amount of charges at the time of switching in the driving device is generated at a low potential.

### Means for solving the Problems

In the case where the voltage between the common terminal and the segment terminal which sandwich a dot pixel is expressed by "VCOM-VSEG", a positive side driving mode for controlling, on the positive side of the terminal voltage, a change in voltage for determining whether dot display is white or black and conversely a negative side driving mode for controlling the change on the negative side are provided. The positive side driving mode and the negative side driving mode are suitably switched based on an ambient temperature, to realize low current consumption driving. In other words, in the case of the large driving voltage amplitude, such as the case of low temperature, the negative side driving mode is selected. In the case of the small driving voltage amplitude, such as the case of high temperature, the positive side driving mode is selected. Therefore, an unnecessary current consumption is minimized.

In the case of low temperature, the potential of each of the common and segment terminals is driven with a maximum possible amplitude which may be output by both the common and segment terminals, and changed, to drive the voltage "VCOM-VSEG" between both the terminals with a larger amplitude. Therefore, a large driving voltage width is realized.

In the case of high temperature, the potential of each of the common and segment terminals is changed avoiding a central potential of the maximum possible amplitude which may be output by both the common and segment terminals and with an amplitude smaller than the maximum amplitude, to drive the voltage "VCOM-VSEG" between both the terminals with a smaller amplitude. Therefore, smaller-voltage amplitude driving is realized while an increase in ON-resistance of an output transistor is minimized.

### Effects of the Invention

According to the present invention, the driving modes may be selected to perform rational driving corresponding to characteristics of the bistable liquid crystal panel, and hence low power consumption is realized.

In other words, in the case of low temperature in which the large driving voltage amplitude is required, the negative side driving mode is selected to perform driving control with higher voltage efficiency. In cases other than the low temperature, the positive side driving mode is selected to realize lower current consumption driving.

When a general-purpose STN driver is used as a segment driving device, a segment output amplitude reduces and an ON-resistance of an output transistor normally increases. However, when the positive side driving mode of the driving modes in the present invention is used, minimization of increase in ON-resistance of the driving transistor may be realized.

### Brief Description of the Drawings

FIG. 1 is a general functional block diagram illustrating display control of a bistable liquid crystal panel.
FIG. 2 is an explanatory diagram illustrating switching of a bistable liquid crystal.
FIG. 3 is a schematic diagram illustrating the bistable panel.
FIG. 4 illustrates examples of common and segment waveforms applied to the bistable liquid crystal panel.
FIG. 5 illustrates an input and output table of a SEG driver.
FIG. 6 illustrates input and output tables of a COM driver.
FIG. 7 illustrates examples of waveforms in a positive side driving mode (Mode-A).
FIG. 8 illustrates examples of waveforms in a positive side driving mode (Mode-B).
FIG. 9 illustrates examples of waveforms in a negative side driving mode (Mode-C).
FIG. 10 illustrates examples of waveforms in a negative side driving mode in which the number of amplitude steps is reduced by two (Mode-D).

### Mode for carrying out the Invention

An embodiment of the present invention is described below.

### First Embodiment

Hereinafter, the present invention is described by a specific example with reference to the attached drawings.

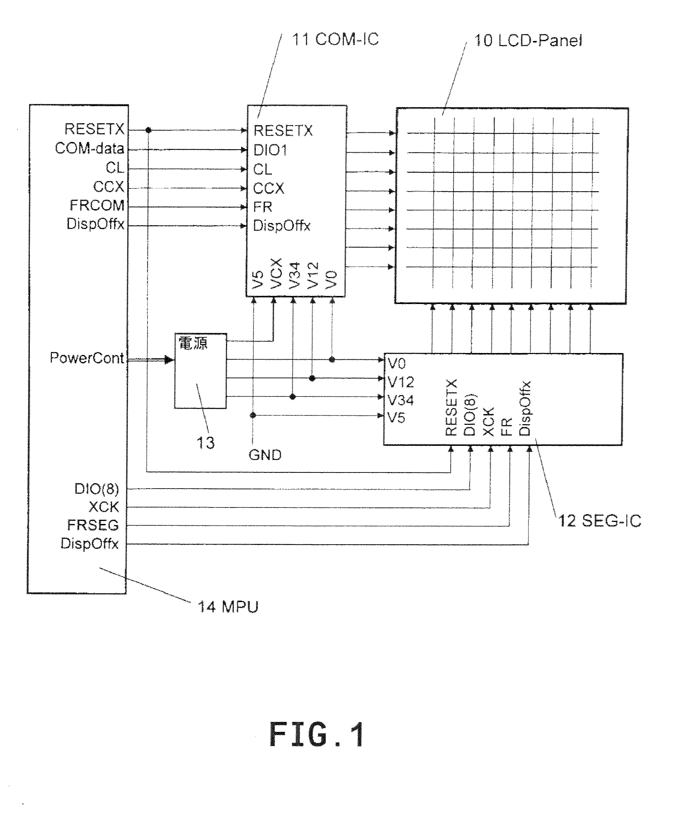

FIG. 1 is a general functional block diagram illustrating display control of a bistable liquid crystal display panel 10.

A driving device includes a COM-IC 11 (common driving section) for driving common lines in a lateral direction, a SEG-IC 12 (segment driving section) for driving segment lines in a longitudinal direction, a power supply circuit 13 for generating driving potentials (V0, V12, V34, V5, and VCX), and an MPU 14 (control circuit) for controlling the respective ICs and the power supply circuit. Signals and functions for controlling the COM-IC 11 and the SEG-IC 12 by the MPU 14 are the same as a normal STN driver circuit. An initialization signal RESETX, COM-Data for determining scan timing, a writing clock CL, an alternating current signal FR, and DispOffx for display erasing are set for the COM-IC 11. The initialization signal RESETX, DIO(8) for providing display image data, a writing clock XCK, the alternating current signal FR, and DispOffx for display erasing are set for the SEG-IC.

The power supply circuit may be incorporated in the COM-IC 11 or the SEG-IC 12 may be further incorporated therein, to thereby serve as a single IC.

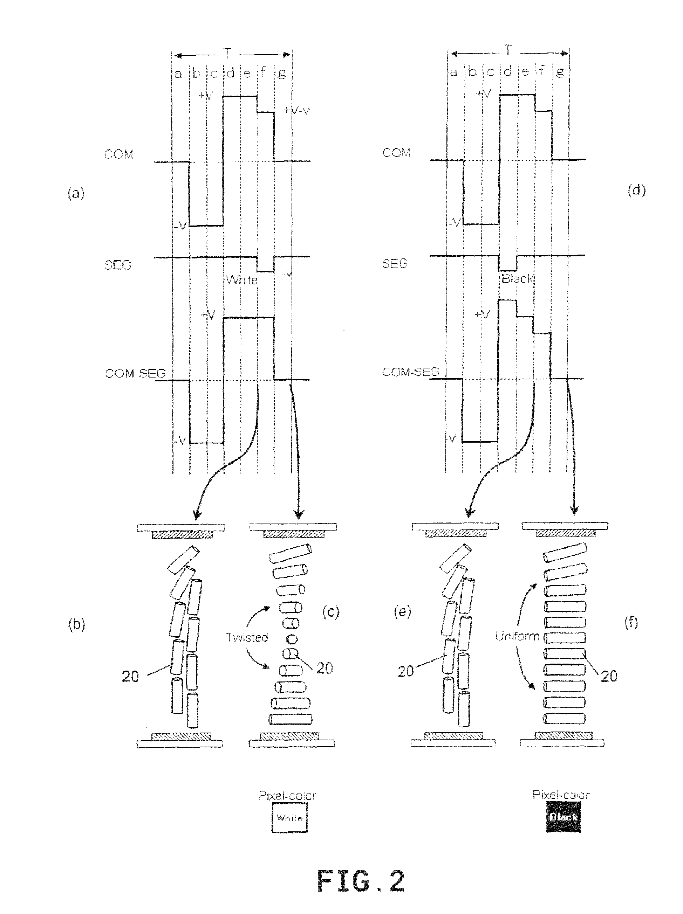

FIG. 2 is an explanatory diagram illustrating switching between states of a bistable nematic liquid crystal, which illustrates a case where specific signals are applied to the common and segment lines of the bistable liquid crystal display panel 10 to switch a twisted direction of nematic liquid crystal molecules between two kinds of states which are called a twisted state and a uniform state.

The twisted state and the uniform state are changed to white display and black display depending on a direction in which polarizing plates are provided. In this case, for ease of description, the twisted state corresponds to the white display and the uniform state corresponds to the black display state. When an angle at which the polarizing plates are provided is adjusted, the twisted state may be set to the black display and the uniform state may be set to the white display state.

In the drawings attached to this application, reference symbol COM denotes a common signal applied to a common electrode, COM-Scan denotes a common signal at the time of selection, that is, a selection signal, COM-No Scan denotes a common signal at the time of non-selection, that is, a non-selection signal, SEG denotes a segment signal applied to a segment electrode, and COM-SEG denotes a common-segment voltage, that is, a display voltage applied to an intersection pixel sandwiched by the common electrode and the segment electrode. The write signal is divided into two kinds of signals, a white write signal and a black write signal. The display voltage is divided into two kinds of voltages, a white display voltage and a black display voltage.

First, a case where white is displayed on the intersection pixel between the common electrode and the segment electrode in the bistable liquid crystal display panel 10 is described. As indicated by "COM" illustrated in part (a) of FIG. 2, a voltage waveform of the selection signal applied to the common terminal is a waveform which has a level of 0 for a first time interval "a" of a selection period T, a negative level -V for time intervals "b" and "c", a positive level +V for subsequent time intervals "d" and "e", a positive level +V-v for a subsequent time interval "f", and the level of 0 for a remaining time interval "g".

As indicated by "SEG" illustrated in part (a) of FIG. 2, a voltage waveform of the white write signal applied to the segment terminal is a waveform which has the level of 0 for the first time interval "a" to the time interval "e" of the selection period T, a negative level -v for the subsequent time interval "f", and the level of 0 for the remaining time interval "g".

When the selection signal and the white write signal which are changed with time are applied as described above, a waveform of the white display voltage which is a difference voltage between the common terminal and the segment terminal becomes a waveform changed with time. That is, as indicated by "COM-SEG" illustrated in part (a) of FIG. 2, the waveform of the white display voltage is a waveform which has the level of 0 for the first time interval "a" of the selection period T, the negative level -V for the subsequent time intervals "b" and "c", the positive level +V for the subsequent time intervals "d" and "f", and the level of 0 for the remaining time interval "g". Therefore, the waveform of the white display voltage is changed between the negative level -V and the positive level +V.

The reason why the white display voltage having the waveform as described above is applied to the nematic liquid crystal is as follows. First, a stable state of the orientation of nematic liquid crystal molecules 20 is broken by the voltage having the negative level -V to raise the nematic liquid crystal molecules in a longitudinal direction (schematic view of part (b) of FIG. 2). After that, the voltage having the positive level +V is lowered to the voltage having the level of 0 to lay the nematic liquid crystal molecules 20 in an alignment direction (schematic view of part (c) of FIG. 2), to thereby set the twisted state. Therefore, the white is displayed on the intersection pixel of the bistable liquid crystal display panel 10 which is applied with the white display voltage having the waveform indicated by "COM-SEG" illustrated in part (a) of FIG. 2.

Next, a case where black is displayed on the intersection pixel between the common electrode and the segment electrode in the bistable liquid crystal display panel 10 is described. The voltage waveform "COM" of the selection signal applied to the common terminal illustrated in part (d) of FIG. 2, is identical to the waveform indicated by "COM" illustrated in part (a) of FIG. 2.

As indicated by "SEG" illustrated in part (d) of FIG. 2, a voltage waveform of the black write signal is a waveform which has the level of 0 for the first time interval "a" to the time interval "c" of the selection period T, the negative level -v for the subsequent time interval "d", and the level of 0 for remaining time intervals "e" to "g".

When the selection signal and the black or write signal which are changed with time are applied as described above, a waveform of the black display voltage which is a difference voltage between the common terminal and the segment terminal becomes a waveform changed with time. That is, as indicated by "COM-SEG" illustrated in part (d) of FIG. 2, the waveform of the black display voltage is a waveform which has the level of 0 for the first time interval "a" of the selection period T, the negative level -V for the subsequent time intervals "b" and "c", a positive level +(V+v) for the subsequent time interval "d", the positive level +V for the subsequent time interval "e", the positive level +V-v for the subsequent time interval "f", and the level of 0 for the remaining time interval "g". Therefore, the black display voltage is changed between -V and +(V+v).

The reason why the black display voltage having the waveform as described above is applied to the nematic liquid crystal is as follows. First, a stable state of the orientation of nematic liquid crystal molecules is broken by the negative level -V to raise the nematic liquid crystal molecules 20 in the longitudinal direction (part (e) of FIG. 2). After that, a positive level +(V+v) is reduced to the positive level +V, the positive level +V is reduced to a positive level +V-v, and at the end, the positive level +V-v is reduced to the level of 0. The stepwise reduction is performed to align the nematic liquid crystal molecules 20 in a substantially parallel manner (schematic view of part (f) of FIG. 2), to thereby set the uniform state. Therefore, the black is displayed on the intersection pixel of the bistable liquid crystal display panel 10 which is applied with the black display voltage indicated by "COM-SEG" illustrated in part (d) of FIG. 2.

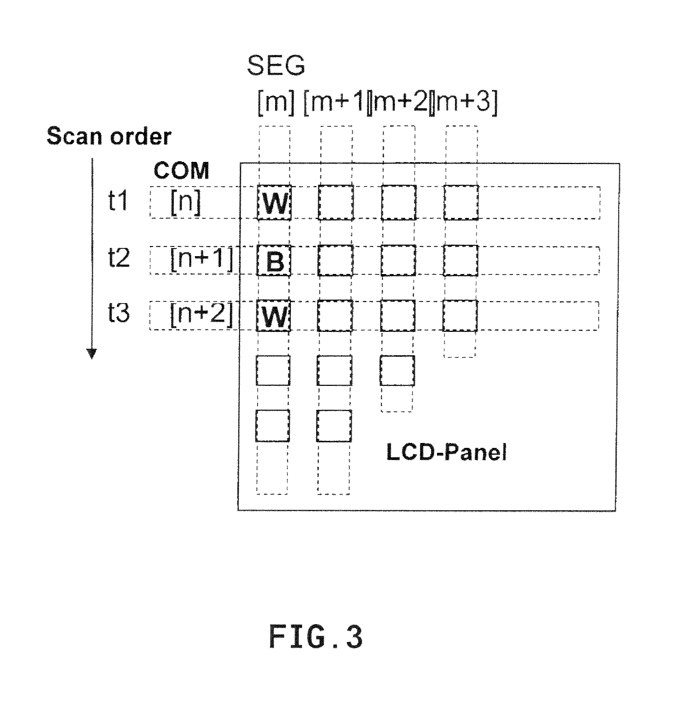

FIG. 3 is a schematic diagram illustrating the bistable liquid crystal display panel 10. The bistable liquid crystal display panel 10 is partially schematically illustrated and includes: three successive row common terminals, that is, an n-th row common terminal COM[n], an (n+1)-th row common terminal COM[n+1], and an (n+2)-th row common terminal COM[n+2]; and three column segment terminals which intersect with the common terminals, that is, an m-th column segment terminal SEG[m], an (m+1)-th column segment terminal SEG[m+1], and an (m+2)-th column segment terminal SEG[m+2].

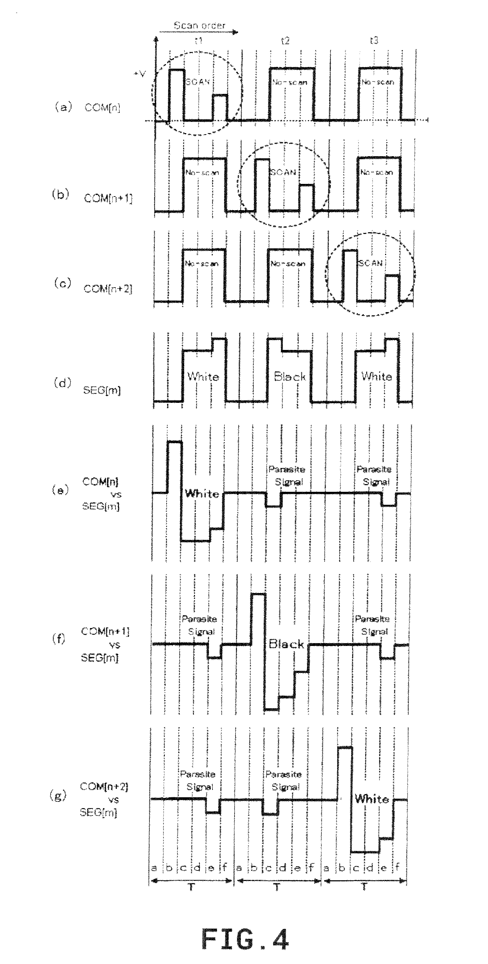

FIG. 4 illustrates examples of voltage waveforms applied to the common terminals and the segment terminals in the bistable liquid crystal display panel 10. The voltage waveforms applied to the three successive row common terminals COM[n], COM[n+1], and COM[n+2] and the m-th column segment terminal SEG[m] which intersects with the common terminals in the bistable liquid crystal display panel 10 are illustrated with a lapse of time. Note that regions encircled by broken lines indicate the voltage waveforms of the selection signals.

As illustrated in parts (a) to (c) of FIG. 4, each of the voltage waveforms of the selection signals applied to the common terminals at the time of selection (scan) is a waveform which has a level of 0 for a first time interval "a" of a selection period T, a positive level +V12 for a subsequent time interval "b", a level of 0 for subsequent time intervals "c" and "d", a level +VCX for a time interval "e", and the level of 0 for a remaining time interval "f'.

As illustrated in parts (a) to (c) of FIG. 4, each of the voltage waveforms of the non-selection signals applied to the common terminals at the time of non-selection (No-scan) is a waveform which has a level of 0 for the first time interval "a" and the time interval "b" of a selection period T, a positive level +V12 for subsequent time intervals "c" to "e", and the level of 0 for a remaining time interval "f".

The voltage waveform of the signal applied to the common terminal is significantly different between FIGS. 2 and 4. That is, the voltage waveform of COM of the selection signal illustrated in FIG. 2 is a voltage waveform significantly changed to the positive and negative sides, but the voltage waveform of COM of the selection signal illustrated in FIG. 4 is a waveform changed to only the positive side. FIG. 2 does not illustrate the non-selection signal, but the non-selection signal illustrated in FIG. 4 also has a waveform changed to only the positive side.

As illustrated in part (a) of FIG. 4, the n-th row common terminal COM[n] is applied with the selection signal for a scan time section t1 and the non-selection signals for scan time sections t2 and t3. As illustrated in part (b) of FIG. 4, the subsequent (n+1)-th row common terminal COM[n+1] is applied with the non-selection signal for the scan time section t1, the selection signal for the scan time section t2, and the non-selection signal for the scan time section t3. As illustrated in part (c) of FIG. 4, the subsequent (n+2)-th row common terminal COM[n+2] is applied with the non-selection signals for the scan time sections t1 and t2 and the selection signal for the scan time section t3.

Voltage waveforms of the segment voltages, that is, the white write signal and the black write signal, which are applied to the segment terminal, are illustrated in part (d) of FIG. 4. In this case, the white write signal is applied for the scan time section t1, the black write signal is applied for the scan time section t2, and the white write signal is applied for the scan time section t3.

The voltage waveform of the white write signal is a waveform which has the level of 0 for the first time interval "a" and the time interval "b" of the selection period T, the positive level +V12 for the subsequent time intervals "c" and "d", a positive level +V0 for the subsequent time interval "e", and the level of 0 for the remaining time interval "f'.

Further, the voltage waveform of the black write signal is a waveform which has the level of 0 for the first time interval "a" and the time interval "b" of the selection period T, the positive level +V0 for the subsequent time interval "c", the positive level +V12 for the subsequent time intervals "d" and "e", and the level of 0 for the remaining time interval "f".

When the selection signal or the non-selection signal is applied to the common terminals and the white write signal or the black write signal is applied to the segment terminal as described above, the common-segment voltages between the common terminals and the segment terminal, that is, the white display voltage and the black display voltage, as illustrated in parts (e) to (g) of FIG. 4, are obtained.

In other words, as illustrated in part (e) of FIG. 4, an intersection pixel between the n-th row common terminal COM[n] and the m-th column segment terminal SEG[m] in the scan time section t1 is applied with the white display voltage of a waveform which has the level of 0 for the first time interval "a" of the selection period T, the positive level +V12 for the subsequent time interval "b", a negative level -V12 for the subsequent time intervals "c" and "d", a negative level -V0+VCX for the subsequent time intervals "e", and the level of 0 for the remaining time interval "f".

In the scan time section t2, a first parasite signal is applied, having a voltage waveform which has the level of 0 for the first time interval "a" and the time interval "b" of the selection period T, a negative level -V0+V12 for the subsequent time interval "c", and the level of 0 for the remaining time intervals "d" to "f". In the scan time section t3, a second parasite signal is applied, having a voltage waveform which has the level of 0 for the first time interval "a" to the time interval "d" of the selection period T, the negative level -V0+V12 for the subsequent time interval "e", and the level of 0 for the remaining time interval "f".

As illustrated in part (f) of FIG. 4, an intersection pixel between the (n+1)-th row common terminal COM[n+1] and the m-th column segment terminal SEG[m] is applied with the second parasite signal in the scan time section t1, the black display voltage in the scan time section t2, and the second parasite signal in the scan time section t3. The black display voltage is a voltage of a waveform which has the level of 0 for the first time interval "a" of the selection period T, the positive level +V12 for the subsequent time interval "b", the negative level -V0 for the subsequent time interval "c", the negative level -V12 for the subsequent time interval "d", the negative level -V12+VCX for the subsequent time interval "e", and the level of 0 for the remaining time interval "f".

As illustrated in part (g) of FIG. 4, an intersection pixel between the (n+2)-th row common terminal COM[n+2] and the m-th segment terminal SEG[m] is applied with the second parasite signal in the scan time section t1, the first parasite signal in the scan time section t2, and the white display voltage in the scan time section t3.

As described above, the white and black display corresponding to each line in the bistable liquid crystal display panel 10 is determined based on the signal state of each common line for outputting the voltage waveform of the selection signal and the signal states of all the segment lines. All the common lines corresponding to a screen are sequentially scanned to determine the entire screen display. Only one common line on the entire screen is scanned in that instant, and the voltage waveforms of the non-selection signals are output from a large majority of remaining common lines. When the charge and discharge amount of the bistable liquid crystal display panel 10 is taken into account, it is necessary to pay the attention to a potential difference between the voltage of the non-selection signals output from the large majority of common lines and the voltage of the white write signal or the black write signal which is applied to the segment terminal. In other words, the parasite signals in the waveform of the common-segment voltage between the common terminal and the segment terminal greatly contribute the charge and discharge amount for driving the bistable liquid crystal display panel 10 to affect current consumption.

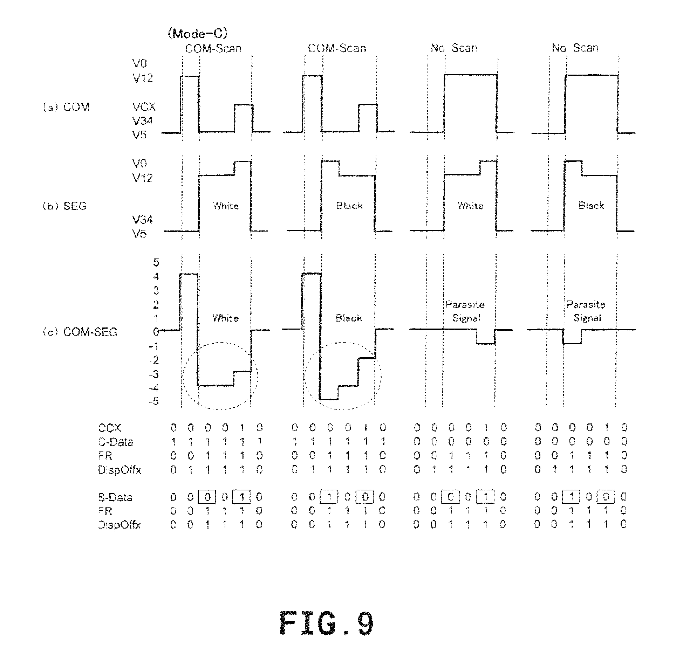

FIG. 9 illustrates waveforms in a specific driving mode (Mode-C) of the bistable liquid crystal display panel 10. Four kinds of waveforms applied to the bistable liquid crystal display panel 10 are a selection signal applied to a common terminal at the time of selection (COM-Scan in part (a) of FIG. 9), a non-selection signal applied to the common terminal at the time of non-selection (NO-Scan in part (a) of FIG. 9), a white write signal applied to a segment terminal (SEG-White in part (b) of FIG. 9), and a black write signal applied to the segment terminal (SEG-Black in part (b) of FIG. 9). Part (c) of FIG. 9 illustrates waveforms of common-segment voltages between the common terminal and the segment terminal, which exhibits differences between values corresponding to the combination of each (a) and (b) of FIG. 9. The voltage waveforms are the same as illustrated in FIG. 4.

In FIG. 9: COM-SCAN, SEG-White, and a COM-SEG switching waveform (White) are illustrated from the top of the first column counted from the left; COM-SCAN, SEG-Black, and a COM-SEG switching waveform (Black) are illustrated from the top of the second column counted from the left; No-SCAN, SEG-White, and a COM-SEG parasite signal are illustrated from the top of the third column counted from the left; and No-SCAN, SEG-Black, and a COM-SEG parasite signal are illustrated from the top of the fourth column counted from the left.

FIG. 9 illustrates the four kinds of voltages applied to the intersection pixel between the common terminal and the segment terminal, that is, the white display voltage, the black display voltage, the first parasite signal, and the second parasite signal. The voltage waveforms are the same as illustrated in FIG. 4.

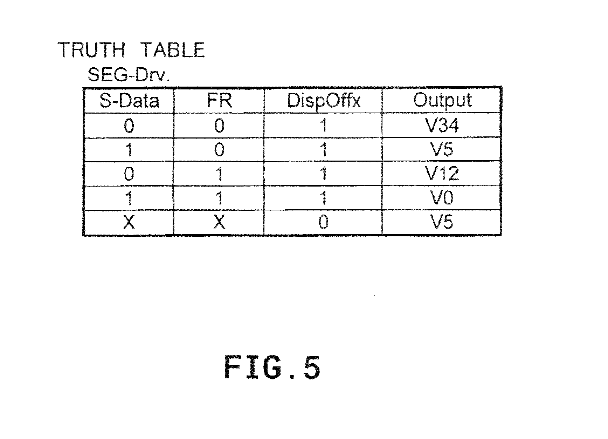

Numerals "1" and "0" illustrated in part (d) of FIG. 9 indicate control signals for the waveform of the common voltage applied to the common terminal and the waveform of the segment voltage applied to the segment terminal. The waveform of the common voltage is controlled based on four signals CCX, C-Data, FR, and DispOffx. The waveform of the segment voltage is controlled based on three signals S-Data, FR, and DispOffx. When a driver (not employing SA driving system) which is already commercially available and normally drives a general STN liquid crystal is used as a segment driving device, an output voltage is controlled based on the three control signals using an input and output table of a segment driving driver (SEG-Drv.) which is illustrated in FIG. 5, and hence the correspondences between the segment control signals and the segment voltage waveforms as illustrated in FIG. 9 are established.

The COM waveform for driving the bistable liquid crystal panel has the potential VCX in addition to potentials for normally driving the general STN liquid crystal, and hence a control signal for outputting the potential is expressed by CCX.

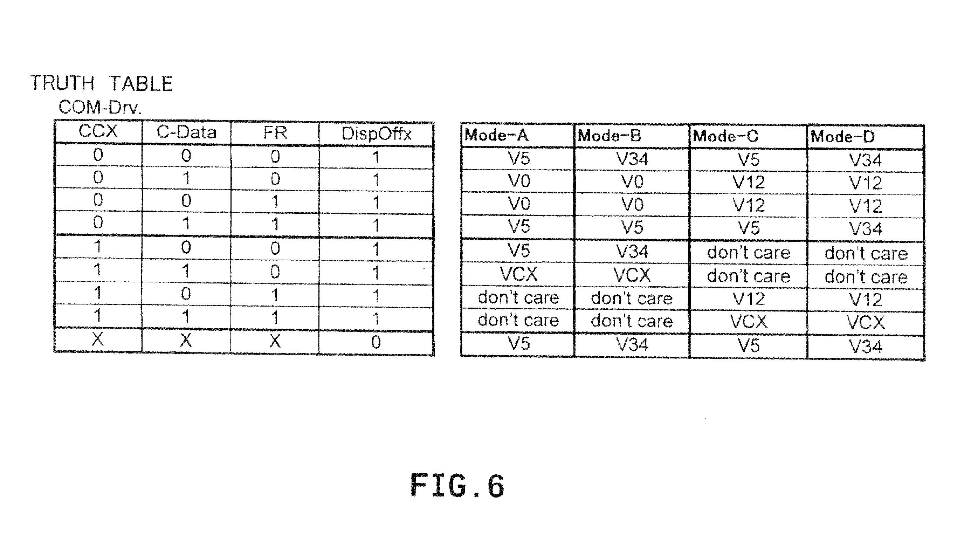

When common output control is performed as illustrated in the column of a driving mode (Mode-C) using an input and output table of a common driving driver (COM-Drv.) which is illustrated in FIG. 6, the correspondences between the common control signals and the common voltage waveforms as illustrated in FIG. 9 are established.

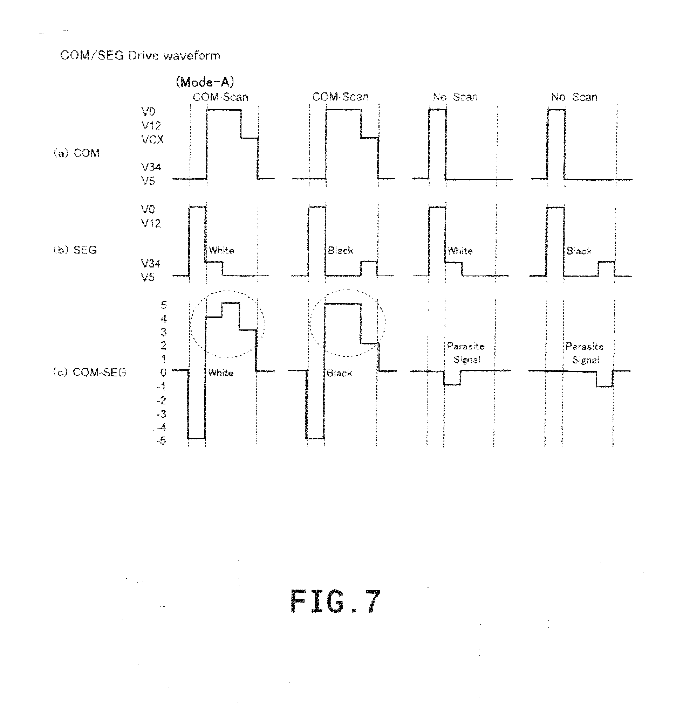

FIGS. 7 to 10 illustrate examples of four kinds of driving modes (Mode-A, B, C, and D).

In FIG. 7, when part (c) of FIG. 7 illustrating a COM-SEG waveform of each common-segment terminal voltage in "Mode-A" is referred to, positive side driving follows negative side driving and a change in voltage (region encircled by broken line) for determining dot display is provided during the positive side driving. The driving on both the positive and negative sides is performed in general consideration of preventing a direct current bias to the liquid crystal to make a balance. A mode in which the change in voltage (region encircled by broken line) for determining whether the dot display is white or black is controlled on the positive side is defined herein as a positive side driving mode. In the waveform of "Mode-A" which is the positive side driving mode, a parasite signal at the time of No-Scan is generated at low potentials (V34 and V5) of the segment waveform. In other words, a pixel electrode between the common electrode and the segment electrode is charged and discharged with charges from the low potentials (V34 and V5), and hence it is unnecessary to use a high-voltage power source. Therefore, a current consumption of the driving device is suppressed to a small value.

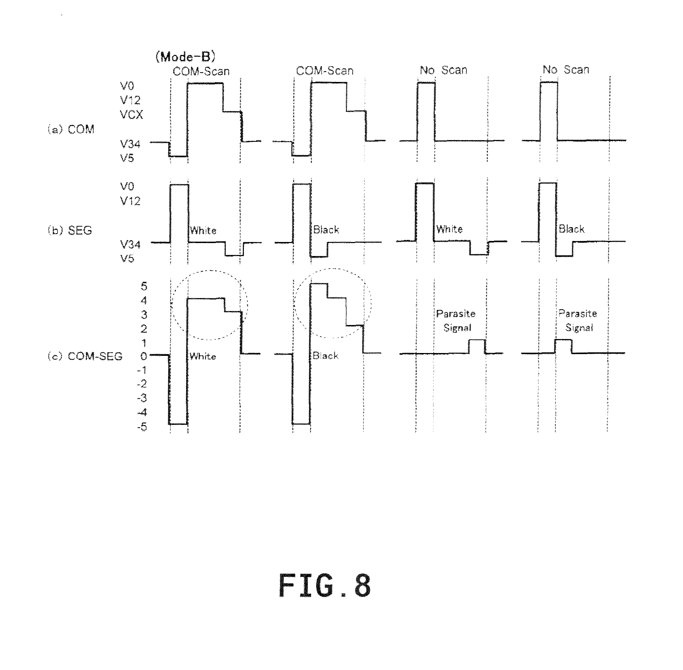

In FIG. 8, as in the case of "Mode-A", Mode-B is the positive side driving mode. A parasite signal at the time of No-Scan is generated at the low potentials (V34 and V5) of the segment waveform.

In contrast to this, in FIG. 9, when part (c) of FIG. 9 illustrating each common-segment terminal voltage in "Mode-C" is referred to, a change in voltage (region encircled by broken line) for determining whether dot display is white or black is generated and controlled on the negative side. This is defined herein as a negative side driving mode. In the waveform of "Mode-C", a parasite signal at the time of No-Scan is generated at high potentials (V0 and V12) of the segment waveform. In other words, a pixel electrode between the common electrode and the segment electrode is charged and discharged with charges from the high potentials (V0 and V12), and hence it is necessary to inject charges from a high-voltage power source. Therefore, a current consumption of the driving device becomes larger.

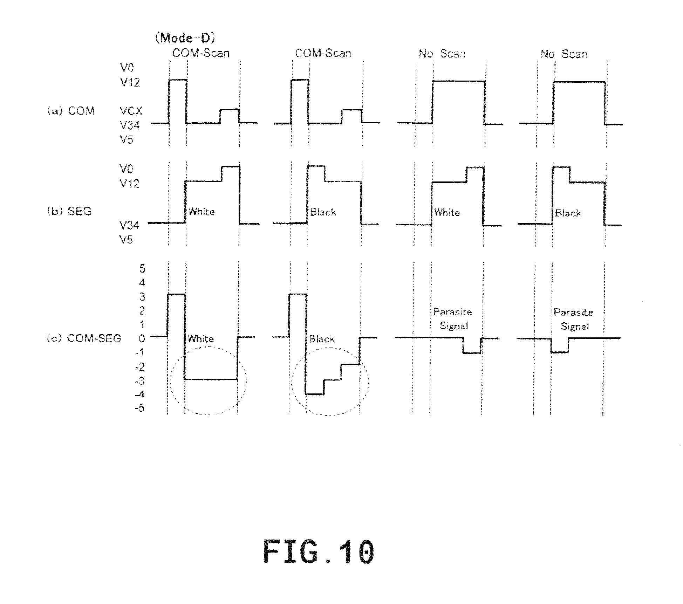

In FIG. 10, as in the case of "Mode-C", Mode-D is the negative side driving mode. A parasite signal at the time of No-Scan is generated at the high potentials (V0 and V12) of the segment waveform.

In FIG. 7, "Mode-A" is a mode in which the output is changed with a maximum amplitude. Each of the common and segment outputs is changed with the maximum amplitude between V0 and V5. The COM-SEG voltage waveform also has a maximum amplitude. In contrast to this, a common amplitude in "Mode-D" illustrated in FIG. 10 is between V12 and V34 and thus smaller than the maximum amplitude between V0 and V5 by two steps. A fundamental segment amplitude is also between V12 and V34 and thus smaller than the maximum amplitude between V0 and V5 by two steps. Therefore, when each of the common and segment amplitudes is smaller than the maximum amplitude by the two steps, the amplitude of the combined COM-SEG waveform is reduced by four steps.

The ON-resistance of the output transistor is maximized by a substrate effect when a central potential (1/2 potential) of a maximum possible amplitude which may be output from the transistor is output. When a lower ON-resistance is required, it is necessary to avoid the output of the central potential.

In the case where the driver which is commercially available and normally drives the general STN liquid crystal is used as each of the common and segment driving devices, when each of the common and segment outputs is provided with the maximum amplitude (between V0 and V5) and further output with potentials (V12 and V34) obtained by a reduction from the upper limit by one step and an increase from the lower limit by one step, that is, with an amplitude reduced by two steps in total, the COM-SEG voltage is driven with an amplitude smaller by four steps than the amplitude in the case of output with the maximum amplitude (between V0 and V5). For example, in a case where a voltage between V0 and V5 is approximately 10 V, when each of the common and segment outputs is provided with the maximum amplitude (between V0 and V5), the COM-SEG voltage has an amplitude of ±10 V. However, when the potentials V12 and V34 are set to values obtained by the reduction from the upper limit by 2 V and the increase from the lower limit by 2 V and each of the common and segment outputs is provided with the amplitude between V12 and V34, the COM-SEG voltage has an amplitude of ±6 V.

Even when a minimum driving voltage (voltage between V0 and V5) of each of the common and segment driving devices is 10 V, driving with the amplitude as small as ±6 V may be realized without a significant increase in ON-resistance of the output transistor because the vicinity of the central potential (= 10 V / 2 = 5 V) in which the ON-resistance is increased by the substrate effect is not used. When the central potential of the maximum possible output amplitude of each of the common and segment outputs is avoided and the outputs are changed with the small amplitude, the COM-SEG voltage may be driven with the smaller amplitude without the significant increase in ON-resistance of the output transistor.

The respective potentials (V0, V12, VCX, V34, and V5) of the driving waveforms illustrated in FIGS. 7 to 10 are set to suitable voltages based on a size of the liquid crystal panel, the number of pixels, an ambient temperature, and the like, as in a case of the driving potentials of the normal general-purpose STN driver. In a case of low temperature, a high driving voltage is required for the liquid crystal, and hence the voltage between V0 and V5 is increased and driving is performed in the negative side driving mode (Mode-C) or the positive side driving mode (Mode-A). In a case of room temperature or high temperature, driving is performed in the positive side driving mode (Mode-B) to reduce a current consumption. In a case of high temperature for which a small driving amplitude is required, the voltage between V0 and V5 is reduced and driving is performed in "Mode-D". Therefore, the COM-SEG driving amplitude is small, but the voltage between V0 and V5 is held to a larger value to minimize the increase in ON-resistance of the output transistor.

In the present invention, when the ambient temperature is to be divided into the low temperature and the high temperature, the low temperature and the high temperature are determined based on 25°C. The low temperature is in a range of -20 degrees to 25 degrees. The high temperature is in a range of 25 degrees to 50 degrees. A more desirable temperature range of the low temperature is in a range of - 20 degrees to 5 degrees. In a case of temperature outside the ranges described above, the voltage amplitude may be adjusted if necessary.

This embodiment describes that the driving with the maximum amplitude is the positive side driving. However, the negative side driving may be set as the driving with the maximum amplitude. In other words, the mode for the negative side driving with the maximum amplitude and the mode for the negative side driving with no maximum amplitude may be switched.

In the present invention, for the sake of convenience, the mode with no maximum amplitude is described as the negative side driving mode in which the number of amplitude steps is reduced by two. However, the mode is merely represented by the specific numerals to facilitate the understanding of this embodiment. Therefore, it is expected to use a voltage waveform with the number of amplitude steps reduced by a plurality of steps according to a used power source and a design method. In the present invention, it is important to use the driving mode with no maximum amplitude in environments except for the low temperature.

The number of modes to be switched is not limited to two and three-step switching according to temperatures is sufficiently expected.

### Industrial Applicability

As described above, the driving method and driving device for freely selecting the driving mode according to environments are used. Therefore, rational driving corresponding to the characteristics of the bistable liquid crystal panel may be achieved, and hence the present invention is useful.

### Description of Symbols

- 10: bistable liquid crystal display panel
- 11: common driving section (COM-IC)
- 12: segment driving section (SEG-IC)
- 13: power supply circuit
- 14: control section (MPU)

## Claims

1. A method of driving a bistable nematic dot matrix liquid crystal display, comprising:
a driving mode for driving, with a maximum possible output amplitude, a voltage between a common terminal and a segment terminal which sandwich a dot pixel; and
a driving mode for driving the voltage with an amplitude smaller than the substantially maximum possible output amplitude avoiding a central potential of the substantially maximum possible output amplitude,
wherein the two kinds of driving modes are switchable.

2. A method of driving a bistable nematic dot matrix liquid crystal display, comprising:
a driving mode for controlling, on a positive side, a voltage between a common terminal and a segment terminal which sandwich a dot pixel; and
a driving mode for controlling the voltage on a negative side,
wherein the two kinds of driving modes are switchable.

3. A method of driving a bistable nematic dot matrix liquid crystal display according to claim 1, wherein
the two kinds of driving modes include a driving mode for driving, with the maximum possible output amplitude, the voltage between the common terminal and the segment terminal which sandwich the dot pixel and controlling the voltage on a positive side, and a driving mode for driving the voltage with the amplitude smaller than the substantially maximum possible output amplitude and controlling the voltage on a negative side.

4. A method of driving a bistable nematic dot matrix liquid crystal display according to claim 1, wherein
the driving mode for driving the voltage with the smaller amplitude includes a driving mode for driving the voltage with an amplitude which is not the maximum possible output amplitude for at least one of the common terminal and the segment terminal which sandwich the dot pixel.

5. A device for driving a bistable nematic dot matrix liquid crystal display panel, comprising:
a bistable liquid crystal display panel including a common line and a segment line;
a common driving section for driving the common line;
a segment driving section for driving the segment line;
a power source circuit for generating a driving potential; and
a control section for controlling the common driving section, the segment driving section, and the power source circuit,
wherein the device for driving a bistable nematic dot matrix liquid crystal display panel switches between a driving mode for driving, with a maximum possible output amplitude, a voltage between a common terminal and a segment terminal which sandwich a dot pixel, and a driving mode for driving the voltage with an amplitude smaller than the substantially maximum possible output amplitude avoiding a central potential of the substantially maximum possible output amplitude.

6. A device for driving a bistable nematic dot matrix liquid crystal display panel, comprising:
a bistable liquid crystal display panel including a common line and a segment line;
a common driving section for driving the common line;
a segment driving section for driving the segment line;
a power source circuit for generating a driving potential; and
a control section for controlling the common driving section, the segment driving section, and the power source circuit,
wherein the device for driving a bistable nematic dot matrix liquid crystal display panel switches between a driving mode for controlling, on a positive side, a voltage between a common terminal and a segment terminal which sandwich a dot pixel, and a driving mode for controlling the voltage on a negative side.

7. A device for driving a bistable nematic dot matrix liquid crystal display panel according to claim 5, wherein
the mode switching is performed between a driving mode for driving, with the maximum possible output amplitude, the voltage between the common terminal and the segment terminal which sandwich the dot pixel and controlling the voltage on a positive side, and a driving mode for driving the voltage with the amplitude smaller than the substantially maximum possible output amplitude and controlling the voltage on a negative side.

8. A device for driving a bistable nematic dot matrix liquid crystal display panel according to claim 5, wherein
the mode switching is performed between the driving mode for driving, with the maximum possible output amplitude, the voltage between the common terminal and the segment terminal which sandwich the dot pixel, and a driving mode for driving the voltage with an amplitude which is not the maximum possible output amplitude for at least one of the common terminal and the segment terminal and driving the voltage between the common terminal and the segment terminal with an amplitude smaller than the maximum amplitude by four logical steps.
